# EUROPEAN PATENT SPECIFICATION

(11) **EP 0 860 479 B1**
(45) Date of publication and mention of the grant of the patent: **10.09.2003**
(21) Application number: 98301185.9
(22) Date of filing: 18.02.1998
(51) Int. Cl.: C09D 9/00

(54) **A stripping composition and method of inhibiting etching**
Abbeizmittel-Zusammensetzung und Verfahren zum Verhindern der Ätzung
Composition décapante et procédé pour empêcher l'attaque du substrat

(30) Priority: 19.02.1997 GB 9703436
(43) Date of publication of application: 26.08.1998
(73) Proprietor: Confederate Chemicals Limited, Newtown, Powys SY16 4LE (GB)
(72) Inventor: Crisp, Ronald Anthony, Tetbury, Gloucestershire, GL8 8EG (GB); Stevenson, Roland John, Llanidloes, Powys, SY18 6JJ (GB)
(74) Representative: Geoffrey Owen & Company

(56) References cited:
- EP-A- 0 524 826
- BE-A- 681 257
- US-A- 5 454 985

## Description

The present invention relates to a stripping composition for removing coatings, in particular organic coatings, from metal substrates particularly those which are easily corroded or damaged.

More particularly the invention is directed to a method of removing an organic coating, in particular paint or powder, from a substrate comprising a soft metal eg aluminium, magnesium or zinc, which substrate can be easily damaged or etched by the effect of water and a strong alkali.

Over the years a number of stripping compositions have been developed for removing coatings, particularly polyester and epoxypolyester powder coatings from metal substrates, particularly aluminium and these generally comprise three components, namely:
1. a component which penetrates the coating and swells or solubilises it;
2. an accelerator, typically a strong alkali which acts to break down the organic coating to cause it to be stripped; and
3. a coupling agent.

The coupling agent, which is typically an alcohol, brings components 1 and 2 above together to form a single phase stable mixture.

A traditional stripping composition might comprise, for example, >50% dichloromethane (the penetrating agent) 1-5% sodium hydroxide (the accelerator); and 25-50% methanol (the coupling agent).

More recently, concerns about chlorinated solvents have lead to alternative penetrating agents, such as N-Methyl 2 pyrrolidine (nMP), being used to replace the chlorinated solvents such as dichloromethane.

A problem associated with stripping organic coatings from substrates comprising aluminium, magnesium or zinc is that the substrate is prone to etching if water gets into the stripping bath. Thus in EP 524826 the applicants emphasise the importance of keeping the stripping bath substantially free from water (less than 1% by weight).

However, preventing water ingress into a tank can be difficult. For example, water may be carried into the tank from wet work stored outside, poorly drained work being returned to the tank after rinsing, splashing from pressure rinsing and even leaky premises. When the levels of water increase, there is a tendency for the accelerator, usually sodium or potassium hydroxide to etch soft metals. When this happens to partially stripped work, it can give a patchy surface which can't always be finished by re-etching.

It is an aim of the present invention to produce new stripping compositions which are less likely to etch or cause unsightly spotting to metals, particularly those comprising aluminium, magnesium or zinc.

Another problem associated with the stripping of components comprising soft metals with strong alkali accelerators is that when water gets into the stripping tank in amounts of greater than 1% by weight, more particularly greater than 2% by weight the stripping composition has to be replaced if etching is to be prevented. This is very costly.

It is thus a further aim of the present invention to develop a method of counteracting the effect of water in the stripping composition so that expensive replacement of the stripping composition can be avoided.

The Applicants have determined that by carefully selecting the coupling agent and optionally including a silicic component, such as, for example, a silicate or silicic acid, etching is inhibited and the stripping composition is able to tolerate substantial amounts of water i.e. over 2% and even exceeding 10% by weight.

Without wishing to be bound by theory, it is believed that the coupling agent helps partition the water thereby preventing the strong alkali localising.

Where the penetrating agent is benzyl alcohol this may be achieved by using a coupling agent comprising a glycol, glycol ether, or mixtures thereof.

It is believed that the silicic component provides a passive coat preventing the etching action of a water/strong alkali mix. The later theory is supported by the fact that the presence of a silicic compound in amounts substantially greater than 5% by weight actually prevents the action of the water/strong alkali mix, thus preventing the stripping composition functioning effectively.

According to a first aspect of the present invention there is provided a stripping composition for stripping a coating from a metal substrate comprising aluminium, magnesium or zinc, comprising a component which penetrates the coating and swells or solubilizes it; an accelerator which breaks down the coating enabling it to be removed and a coupling agent characterised in that the component which penetrates the coating and swells or solubilizes it comprises benzyl alcohol is an amount of at least 25% by weight of the composition and the coupling agent comprises a glycol, a glycol ether or mixtures thereof and said composition comprises not substantially more than 10% by weight of water.

According to a further aspect of the present invention there is provided such a stripping composition which further comprises a silicic component.

Preferably the silicic component is a silicate or a silicic acid. The silicate may be a natural or man made silicate. The preferred silicates are the metasilicates, more preferably still sodium metasilicate.

More preferably the silicic component is present in an amount of 0.1 to 5.0%, more preferably still 0.5 to 2.0% by weight of the composition.

The component which penetrates the coating comprises benzyl alcohol and may additionally comprise any suitable component or mixture of components including chlorinated solvents eg. dichloromethane; pyrrolidones eg. N-Methyl 2 pyrrolidone; lactones eg. butyrolactone.

The accelerator can be any suitable component or mixture of components and includes, but is not limited to, strong alkalis, eg. sodium or potassium hydroxide, sodium or potassium methoxide and tetramethyl ammonium hydroxide.

The coupling agent will be dependant on the chosen penetrating agent and accelerator and includes, but is not limited to, alcohols and ether derivatives thereof eg. methanol, glycols, such as for example, monoethylene glycol, monopropylene glycol, ethyl diglycol, N-Methyl 2 pyrrolidine and mixtures thereof.

Where a coupling agent is present, the composition will typically comprise (in weight percent),
penetrating agent - 25-80%, more preferably 40 - 75%
Accelerator - 1-10%, more preferably 2 - 5%
Coupling agent - 20-75%, more preferably 25 - 60%
and, optionally a silicic component in an amount of up to 5%.

According to a further aspect of the present invention there is provided a method of reducing metal substrate etching when stripping a coating from a metal substrate in a stripping bath containing water and a stripping composition of the invention, wherein a silicic is introduced into the stripping bath:
as part of the stripping composition;
as part of a replenishing composition;
by addition together with or separately from a strong alkali accelerator using a dis-solution chamber through which the stripping composition is pumped or
by dissolving it into rinse water so that water which is carried back into the bath carries the silicic with it.

According to a further aspect of the present invention there is provided a method of reducing metal substrate etching during stripping of a coating from a metal substrate with a stripping composition comprising water and a strong alkali characterised in that a silicic component is introduced to the stripping composition.

The silicic component, preferably Sodium Metasilicate, may be introduced into the stripping bath:
1. as part of the stripping composition;
2. as part of a replenishing composition;
3. by addition together with or separately from the strong Alkali accelerator using a dissolution chamber through which the solution is pumped; or
4. by dissolving it into rinse water so that water which is carried back into the bath carries a silicic with it.

According to yet a further aspect of the present invention there is provided the use of a silicic component as an inhibitor of metal etching.

According to yet a further aspect of the present invention there is provided the use of a silicic component in the manufacture of a stripping composition or replenishing composition for the purpose of inhibiting metal etching.

Accordingly to yet a further aspect of the present invention there is provided a method of improving the action of a stripping composition contaminated with water comprising adding a silicic to reduce etching.

The invention will be further described by way of example only, with reference to the following compositions and tests.

### Comparative Example

| | % w/w |
|---|---|
| Benzyl Alcohol | 97.5 |
| Potassium Hydroxide | 2.5 |

A stripping composition, as above, was prepared and heated to 50°C.

Aluminium panels with a coating of cured polyester powder were immersed in the solution. The coating was removed in 10 minutes. After drying the panels were free of paint with no visible etching.

Next, partially stripped panels were rinsed and reintroduced into the solution with droplets of water on the panel surface. When stripping was complete the panel was rinsed, dried and examined. It was noted that etching had taken place in a similar pattern to the droplets of water. From this it was concluded that whilst this composition was a suitable stripping medium for steel, it could not be used on Aluminium and other metals such as zinc or magnesium.

The solution was then modified by the incorporation of coupling agents selected from glycols, glycol ethers and pyrrolidones which had a flash point well in excess of 50°C and would couple the water with the product. These included n-methyl-2-pyrrolidine, monoethylene glycol, monopropylene glycol and ethyl diglycol.

Experiments were carried out using the example solutions as follows:

### Example 1

| | % w/w |
|---|---|
| Benzyl Alcohol | 46.5 |
| n-Methyl-2-Pyrrolidine | 25 |
| Monoethylene Glycol | 25 |
| Potassium Hydroxide | 3.5 |

### Example 2

| | % w/w |
|---|---|
| Benzyl Alcohol | 71.5 |
| Monoethylene Glycol | 25 |
| Potassium Hydroxide | 3.5 |

The stripping tests described above were repeated and water added in 0.5 % increments. It was noted that etching did not take place until the water content exceeded 2 %.

Experiments were carried out using these solutions to which a silicate derived from metasilicic acid was dissolved in the minimum water possible. The formulations were then:

### Example 3

| | % w/w |
|---|---|
| Benzyl Alcohol | 46.5 |
| n-Methyl-2-Pyrrolidine | 22.5 |
| Monoethlene Glycol | 26.0 |
| Potassium Hydroxide | 3.5 |
| Sodium Metasilicate | 0.5 |
| Water | 1.0 |

### Example 4

| | % w/w |
|---|---|
| Benzyl Alcohol | 67.5 |
| Monoethylene Glycol | 27.5 |
| Potassium Hydroxide | 3.5 |
| Sodium Metasilicate | 0.5 |
| Water | 1.0 |

The stripping tests were repeated with Examples 3 and 4 and it was noted that similar stripping performance was achieved but that no etching took place.

Extended stripping tests took place with Example 4 to simulate use in industry. 1 litre of solution was used continually to strip polyester coated Aluminium panels. At either daily or twice daily intervals depending upon use, the solution was filtered to remove sludge, topped up with fresh material and 0.5% water introduced until 7% water had been introduced when it was noted that excess water separated out from the solution and it could be concluded that water coupled in the solution would contain sodium metasilicate to the maximum of its solubility. Stripping times were noted as acceptable and a lack of etching noted.

Typical results for removal of 80 microns polyester powder from chromated aluminium are given below:

| | Stripping time | | Etching |
|---|---|---|---|
| Example 4 | (Fresh) | 7.5 mins | No |
| Example 4 | (Used) 5 % water | 10.5 mins | No |
| Example 4 | (Used) 5 % water | | |
| Modified | (NO METASILICATE) | 10.5 mins | Yes |

Tests were then carried out with a used solution from a commercial installation. This would have originally comprised:

| | |
|---|---|
| n-Methyl-2-Pyrrolidine | 40-60 % |
| Glycols | 20-40 % |
| Potassium Hydroxide | 2-5 % |

This sample however contained approximately 15% water due to a heating coil leak and rain water ingress. Uncoated aluminium panels were immersed into the solution at 50°C for 15 minutes and etching observed. 1% sodium metasilicate was dissolved in the solution and the tests repeated. Etching did not take place.

The test results indicated that:
1. metal etching resulted from the presence of water in a benzyl alcohol/strong alkali stripper and is reduced by coupling the components with a coupling agent comprising a glycol or, glycol ether in amounts of from 25 to 60% by weight; and
2. metal etching resulting from the presence of water in such compositions, and indeed any stripping composition comprising a strong alkali, can be significantly reduced (inhibited) by incorporating a silicic component in amounts of from 0.1 to 5 % by weight.

## Claims

1. A stripping composition, for stripping a coating from a metal substrate comprising aluminium, magnesium or zinc, comprising a component which penetrates the coating and swells or solubilizes it; an accelerator which breaks down the coating enabling it to be removed and a coupling agent **characterised in that** the component which penetrates the coating and swells or solubilizes it comprises benzyl alcohol is an amount of at least 25% by weight at the composition and the coupling agent comprises a glycol, a glycol ether or mixtures thereof and said composition comprises not substantially more than 10% by weight of water.

2. A stripping composition as claimed in claim 1 wherein the benzyl alcohol is present in an amount from 25 to 80% by weight.

3. A composition as claimed in claims 1 or 2 wherein the stripping composition further comprises a silicic component.

4. A composition as claimed in claim 3 wherein the silicic component is a silicate or a silicic acid.

5. A stripping composition as claimed in claims 3 or 4 wherein the silicic component is present in an amount of from 0.1 to 5% by weight.

6. A stripping composition as claimed in any of claims 1 to 5 in which the accelerator is a strong alkali accelerator.

7. A method of reducing metal substrate etching when stripping a coating from a substrate comprising aluminium, magnesium or zinc in a stripping bath containing water and a stripping composition as claimed in any of claims 1-6 wherein a silicic is introduced into the stripping bath:
as part of the stripping composition;
as part of a replenishing composition;
by addition together with or separately from an accelerator using a dissolution chamber through which the stripping composition is pumped or
by dissolving it into rinse water so that water which is carried back into the bath carrier the silicic with it.

8. A method as claimed in any of claim 7 wherein the coating to be stripped is a polyester or epoxy polyester coating.

9. A method as claimed in claim 8 or claim 9 wherein the accelerator is sodium or potassium hydroxide, sodium or potassium methoxide or tetramethyl ammonium hydroxide.

## Patentansprüche

1. Abziehzusammensetzung zum Abziehen einer Beschichtung von einem Metallsubstrat, das Aluminium, Magnesium oder Zink umfasst, die Folgendes umfasst:
eine Komponente, welche die Beschichtung durchdringt und sie quillt oder löslich macht;
einen Beschleuniger, der die Beschichtung aufspaltet, damit sie entfernt werden kann und
einen Haftvermittler, **dadurch gekennzeichnet, dass** die Komponente, welche die Beschichtung durchdringt und sie quillt oder löslich macht, Benzylalkohol in einer Menge von mindestens 25 Gew.-% der Zusammensetzung umfasst, und der Haftvermittler ein Glycol, einen Glycolether oder Gemische davon umfasst und genannte Zusammensetzung nicht erheblich mehr als 10 Gew.-% Wasser umfasst.

2. Abziehzusammensetzung nach Anspruch 1, worin der Benzylalkohol in einer Menge von 25 bis 80 Gew.-% vorliegt.

3. Zusammensetzung nach Anspruch 1 oder 2, worin die Abziehzusammensetzung ferner eine kieselhaltige Komponente umfasst.

4. Zusammensetzung nach Anspruch 3, worin die kieselhaltige Komponente ein Silikat oder eine Kieselsäure ist.

5. Abziehzusammensetzung nach Anspruch 3 oder 4, worin die kieselhaltige Komponente in einer Menge von 0,1 bis 5 Gew.-% vorliegt.

6. Abziehzusammensetzung nach einem der Ansprüche 1 bis 5, worin der Beschleuniger ein starker Alkalibeschleuniger ist.

7. Verfahren zur Verminderung von Metallsubstratätzung, wenn eine Beschichtung von einem Substrat abgezogen wird, das Folgendes umfasst: Aluminium, Magnesium oder Zink in einem Abziehbad, das Wasser und eine Abziehzusammensetzung nach einem der Ansprüche 1-6 enthält, worin ein kieselhaltiger Stoff in das Abziehbad wie folgt eingeführt wird:
Als ein Teil der Abziehzusammensetzung;
als ein Teil einer Nachfüllzusammensetzung;
durch Zufügen zusammen mit oder getrennt von einem Beschleuniger unter Verwendung einer Auflösungskammer, durch welche die Abziehzusammensetzung gepumpt wird oder
durch ihr Auflösen in Waschwasser, so dass Wasser, das zurück in das Bad getragen wird, den kieselhaltigen Stoff mit sich führt.

8. Verfahren nach einem der Anspruch 7, worin die abzuziehende Beschichtung eine Polyester- oder Epoxidpolyesterbeschichtung ist.

9. Verfahren nach Anspruch 8 oder 9, worin der Beschleuniger Natrium- oder Kaliumhydroxid, Natrium- oder Kaliummethoxid oder Tetramethylammoniumhydroxid ist.

## Revendications

1. Composition décapante, pour décaper un revêtement d'un substrat métallique comprenant de l'aluminium, du magnésium ou du zinc, comprenant un composant qui pénètre dans le revêtement et le gonfle ou le dissout; un accélérateur qui décompose le revêtement lui permettant d'être retiré et un agent de couplage, **caractérisée en ce que** le composant qui pénètre dans le revêtement et le gonfle ou le dissout, comprend de l'alcool benzylique en une quantité d'au moins 25% en poids de la composition, et l'agent de couplage comprend un glycol, un éther de glycol ou des mélanges de ceux-ci et ladite composition ne comprend pas sensiblement plus de 10% en poids d'eau.

2. Composition décapante telle que revendiquée dans la revendication 1, dans laquelle l'alcool benzylique est présent en une quantité de 25 à 80% en poids.

3. Composition telle que revendiquée dans les revendications 1 ou 2, dans laquelle la composition décapante comprend en outre un composant silicique.

4. Composition telle que revendiquée dans la revendication 3, dans laquelle le composant silicique est un silicate ou un acide silicique.

5. Composition décapante telle que revendiquée dans les revendications 3 ou 4, dans laquelle le composant silicique est présent en une quantité de 0,1 à 5% en poids.

6. Composition décapante telle que revendiquée dans l'une quelconque des revendications 1 à 5, dans laquelle l'accélérateur est un accélérateur alcalin puissant.

7. Procédé pour réduire l'attaque d'un substrat métallique en décapant un revêtement d'un substrat comprenant de l'aluminium, du magnésium ou du zinc, dans un bain de décapage contenant de l'eau et une composition décapante telle que revendiquée dans l'une quelconque des revendications 1-6, où un composant silicique est introduit dans le bain de décapage :
comme faisant partie de la composition décapante;
comme faisant partie de la composition de remplissage;
par addition avec un, ou séparément d'un accélérateur, en utilisant une chambre de dissolution à travers laquelle la composition décapante est pompée ou
en le dissolvant dans l'eau de rinçage de sorte que l'eau qui est réacheminée dans le bain achemine le composant silicique avec elle.

8. Procédé tel que revendiqué dans l'une quelconque des revendication 7 [sic], dans lequel le revêtement à décaper est un revêtement polyester ou époxy polyester.

9. Procédé tel que revendiqué dans la revendication 8 ou la revendication 9 [sic], dans lequel l'accélérateur est de l'hydroxyde de sodium ou de potassium, du méthoxyde de sodium ou de potassium ou de l'hydroxyde de tétraméthylammonium.
